# EUROPÄISCHE PATENTSCHRIFT

(11) **EP 1 081 407 B1**
(45) Veröffentlichungstag und Bekanntmachung des Hinweises auf die Patenterteilung: **23.04.2003**
(21) Anmeldenummer: 00890275.1
(22) Anmeldetag: 06.09.2000
(51) Int. Cl.: F16F 7/104, F16F 1/04

(54) **Gedämpfte Feder**
Damped spring
Ressort amorti

(30) Priorität: 06.09.1999 AT 152699
(43) Veröffentlichungstag der Anmeldung: 07.03.2001
(73) Patentinhaber: Siemens SGP Verkehrstechnik GmbH, 1110 Wien (AT)
(72) Erfinder: Zöscher, Karl, Dipl.-Ing., 8112 Gratwein (AT)
(74) Vertreter: Matschnig, Franz, Dipl.-Ing.

(56) Entgegenhaltungen:
- DE-A- 19 530 668
- DE-U- 1 979 962
- FR-A- 2 569 150
- US-A- 3 128 087
- PATENT ABSTRACTS OF JAPAN vol. 1996, no. 02, 29. Februar 1996 (1996-02-29) & JP 07 259915 A (SUZUKI MOTOR CORP), 13. Oktober 1995 (1995-10-13)
- PATENT ABSTRACTS OF JAPAN vol. 1999, no. 13, 30. November 1999 (1999-11-30) & JP 11 230251 A (KINUGAWA RUBBER IND CO LTD), 27. August 1999 (1999-08-27)

## Beschreibung

Die Erfindung betrifft eine Schrambenfeder, an welcher an einem Schraubengang zumindest ein Schwingungstilger befestigt ist, der zumindest ein Massenelement aufweist.

Im Inneren des Wagenkastens von Schienenfahrzeugen, insbesondere bei Lokomotiven, treten häufig unangenehme Lärmbelästigungen auf. Der Grund dafür ist, dass beim Überfahren von Schienenschwellen Schraubenfedern, die zur Schwingungsdämpfung des Wagenkastens gegen das Drehgestell dienen, mit einer sogenannten "Schwellenfrequenz" zu Eigenschwingungen in Richtung ihrer Längsachse angeregt werden. Diese "Schwellenfrequenz" ist vom Abstand der Schwellen und von der Bewegungsgeschwindigkeit des Schienenfahrzeuges abhängig. Liegt nun die Schwellenfrequenz im Bereich der Eigenfrequenz der Schraubenfedern, so kommt es zu Resonanzanregungen der Federn, die sich im Wageninneren durch zum Teil starke Dröhnerscheinungen bemerkbar machen.

Bisherige Versuche, diese Lärmbelästigung einzudämmen, gingen von dem Ansatz aus, Gummifedern seriell zu den Schraubenfedern anzubringen. Dadurch konnten allerdings nur geringe Abminderungen der Resonanzschwingungen und somit der Dröhnerscheinungen erzielt werden.

Aus der JP11125288 ist eine Schraubenfeder mit einem dämpfenden rohr- bzw. schlauchförmigen Urethankunststoff bekannt, welcher in der Mitte der Feder angebracht ist. Mit diesem Rohr oder Schlauch wird eine Vibrationsdämpfung der Feder erreicht. Nachteilig ist, dass der Urethankunststoff hauptsächlich dämpfende und keine schwingungstilgenden Eigenschaften aufweist, sodass eine ausreichende Minderung der oben beschriebenen Resonanzschwingungen und Dröhnerscheinungen nicht möglich ist.

Die EP 0 552 811 A1 zeigt eine Schraubenfeder mit zumindest zwei elastischen Abstandselementen zwischen den Schraubengängen der Feder. Nachteilig ist hier, dass ein Abstandselement jeweils nur für Schraubenfedern mit gleichem Gangabstand verwendet werden kann und dass weiters die Abstandselemente wiederum nur dämpfende Eigenschaften aufweisen.

Aus der US 4 732 372 A geht eine Schraubenfeder mit einem Dämpfungsring hervor, wobei wie bereits erwähnt dämpfende Eigenschaften eine zu geringe Wirkung zeigen, um die genannten Dröhnerscheinungen ausreichend abzumindern.

Weiters sind aus der EP 0 505 705 A1 und der DE 40 25 848 A1 Tilger bzw. Drehschwingungstilger bzw. aus der SU 1 523 444 A eine Tilgungseinrichtung bekannt, allerdings ist in keinem dieser Dokumente eine Lösung aufgezeigt, wie auf einfache Weise die beschriebenen Resonanzschwingungen bei Schraubenfedern von Fahrzeugen, insbesondere Schienenfahrzeugen, ausreichend gemindert werden können.

Aus der JP 07 259915 A ist eine Feder nach dem Oberbegrift von Anspruch 1 bekannt. Durch Anbringen lediglich einer Masse an einem Schraubengang einer Feder ist allerdings eine Resonanzfrequenz einer Feder nur sehr ungenau und breitbandig zu verstellen, sodass Dröhnerscheinungen nicht optimal eingedämmt werden können.

Es ist daher eine Aufgabe der Erfindung, eine Feder zu schaffen, bei der die durch periodische Kräfte angeregten Resonanzschwingungen der Feder stark abgemindert sind.

Diese Aufgabe wird von einer Feder der eingangs genannten Art dadurch gelöst, dass erfindungsgemäß zwischen dem/den Massenelement(en) und dem Schraubengang zumindest ein Federelement angeordnet ist, und das zumindest eine Federelement sowie das/die Massenelement(e) dermaßen aufeinander abgestimmt sind, dass bei einer Anregung der Schraubenfeder mit einer Erregerfrequenz, welche in einem Bereich der zumindest einen Eigenfrequenz der Schraubenfeder liegt bzw. mit dieser übereinstimmt, zumindest ein Teil der Schwingungsenergie der Schraubenfeder auf das zumindest eine Massenelement und/oder das zumindest eine Federelement übergeht.

Die Erfindung schafft eine Feder, bei welcher die durch periodische Kräfte erzeugten Resonanzschwingungen durch unmittelbar an der Feder angebrachte Schwingungstilger abgemindert werden. Durch das Abstimmen der Schwingungstilger auf die Eigenfrequenz der Feder wird die Schwingungsenergie zumindest teilweise auf den oder die Schwingungstilger übertragen, welche nun anstelle der Feder schwingen. Die Schwingungsenergie wird von der Feder nicht mehr auf den Fahrzeugkasten übertragen, sodass auch Dröhnerscheinungen nur mehr unmerklich auftreten bzw. sogar vollständig verschwinden. Durch das Anbringen von Massenelementen sowie geeigneter Federelemente kann der Schwingungstilger sehr genau auf die Eigenfrequenzen verschiedener Federn abgestimmt werden.

Von Vorteil ist es, wenn das zumindest eine Federelement schwingungsdämpfende Eigenschaften aufweist, wodurch die schwingungsmindernden Eigenschaften des Schwingungstilgers noch verstärkt werden.

Dabei erweist es sich als zweckmäßig, wenn das zumindest eine Federelement als Gummifeder ausgebildet ist, da Gummi über schwingungsdämpfende Eigenschaften verfügt, und weiters in den unterschiedlichsten Gummimischungen leicht und günstig erhältlich ist.

Weiters ist es günstig, wenn ein Gummimaterial der Gummifeder einen Verlustwinkel von 10°-20 aufweist.

Eine einfache, kostengünstige und effektive Montage ist möglich, wenn ein Schwingungstilger mittels eines Schalenelementes an einem Federdraht der Feder befestigbar ist.

Eine praxisnahe, serienreife Ausführungsform der Erfindung zeichnet sich durch einen Schwingungstilger, dessen Federelement einerseits fest mit dem Schalenelement und andererseits fest mit einem oder mehreren Massenelementen verbunden ist, aus. Dieser Schwingungstilger weist eine einfache und kompakte Formgebung auf und kann für Federn mit einer bestimmten, vorgegebenen Eigenfrequenz verwendet werden.

Wenn der Schwingungstilger bei verschiedenen Federn mit unterschiedlichen Eigenfrequenzen zum Einsatz kommen soll, kann es auch von Vorteil sein, einen Schwingungstilger zu verwenden, welcher durch ein Schalenelement an einem Federdraht der Feder befestigt ist, wobei das Schalenelement fest mit einer Gewindestange verbunden ist, das Federelement als Rundlager ausgebildet ist, welches auf der Gewindestange angeordnet ist, und weiters außerhalb des Federelementes, in einem dem Schalenelement abgewandten Bereich, zumindest ein Massenelement mit dem Federelement verbunden ist.

Zweckmäßigerweise ist der zumindest Schwingungstilger im Bereich eines Schwingungsbauches einer Eigenfrequenz der zu betilgenden Eigenschwingung an der Feder befestigbar. Durch die Befestigung des Schwingungstilgers im Bereich des Schwingungsbauches wird eine optimale Tilgung der Schwingung erzielt.

Bei einer Betilgung von Resonanzschwingungen an Schraubenfedern ist es zweckmäßig, wenn der zumindest eine Schwingungstilger im wesentlichen auf mittlerer Höhe der Schraubenfeder befestigbar ist, da hier der Schwingungsbauch der ersten Eigenschwingung lokalisiert ist und somit die tilgenden Eigenschaften des Schwingungstilgers am besten zur Geltung kommen.

Schließlich ist eine Verwendung der erfindungsgemäßen Feder als Primär- und/oder Sekundärfeder bei Schienenfahrzeugen zweckmäßig, da hier häufig die weiter oben erläuterten Probleme von Resonanzschwingungen an Primär- und/oder Sekundärfedern, welche zu unangenehmen Dröhnerscheinungen im Fahrzeuginneren führen, auftreten.

Im folgenden ist die Erfindung samt vorteilhafter Ausführungsformen anhand der Zeichnung dargestellt. In dieser zeigen
Fig. 1 einen Vertikalschnitt entlang der Längsachse einer Schraubenfeder mit daran befestigten erfindungsgemäßen Schwingungstilgern nach einer ersten Ausführungsform,
Fig. 2 eine Draufsicht auf eine Schraubenfeder mit daran befestigten erfindungsgemäßen Schwingungstilgern nach einer ersten Ausführungsform,
Fig. 3 eine Draufsicht auf einen Abschnitt eines Federdrahtes einer Schraubenfeder mit einer daran befestigten, zweiten Ausführungsform eines Schwingungstilgers,
Fig. 4 einen Schnitt durch die Schraubenfeder und den daran befestigten Schwingungstilger entlang der Linie IIIa-IIIa nach Fig. 4,
Fig. 5 einen Schnitt durch die Schraubenfeder und den daran befestigten Schwingungstilger entlang der Linie IIIb-IIIb nach Fig. 4, und
Fig. 6 eine Resonanzkurve der inneren und äußeren Sekundärfedern einer Lokomotive vom Typ 1014, aufgenommen bei einem Standversuch, mit und ohne Schwingungstilger.

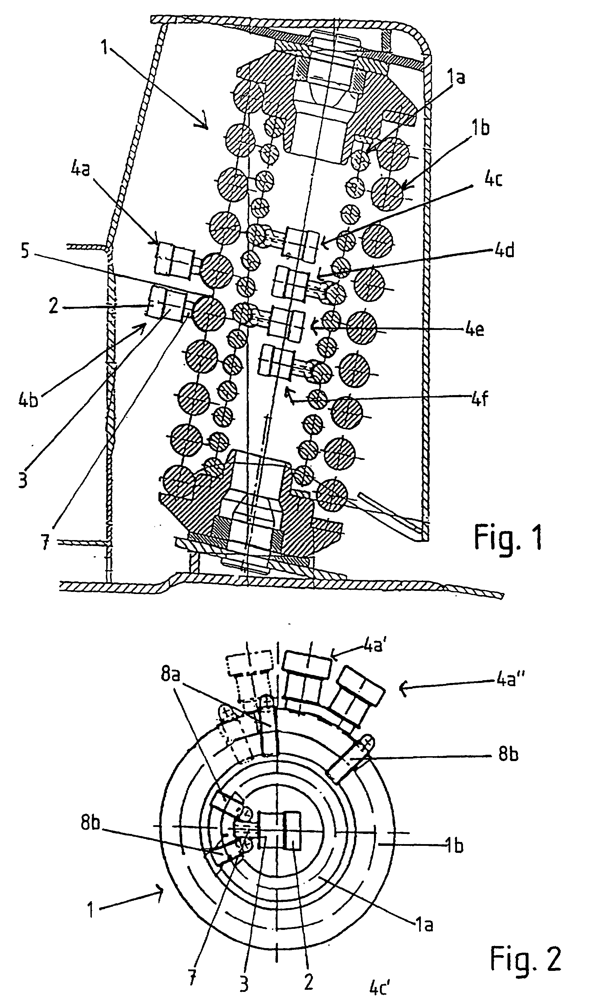

Wie aus Fig. 1 ersichtlich, besitzt die Schraubenfeder 1 in der dargestellten Ausführung einen zweiteiligen Aufbau aus einer inneren Feder 1a und einer äußeren Feder 1b. An den mittleren Windungen der inneren 1a und der äußeren 1b Feder 1 sind erfindungsgemäß Schwingungstilger 4a - 4f angebracht. Dabei ist zu beachten, dass in Fig. 1 die an der inneren Feder 1a angebrachten Schwingungstilger 4c - 4f um einen Winkel von 90° verdreht um die Längsachse der Feder 1 dargestellt sind.

In Fig. 2 ist nochmals die oben beschriebene Schraubenfeder 1 mit zweiteiligem Aufbau und den daran befestigten Schwingungstilgern 4a', 4a", und 4c' in einer Draufsicht dargestellt. Wie aus Fig. 2 erkennbar, sind die an der äußeren Feder 1b angebrachten Schwingungstilger 4a', 4a" um einen Winkel von 90° zu den an der inneren Feder 1a angebrachten Schwingungstilgern, von denen nur der Tilger 4c' erkennbar ist, verdreht angeordnet. Die inneren und äußeren Schwingungstilger sind an den Windungen eines Federdrahtes 6 mittels Klemmen 8a, 8b, beispielsweise Schlauchklemmen, befestigt, wobei die an der äußeren Feder 1b befestigten Schwingungstilger 4a', 4a" in den Außenraum, die an der inneren Feder 1a befestigten Schwingungstilger 4c' hingegen in den Innenraum der Schraubenfeder 1 zeigen. Diese Anordnung der inneren und äußeren Schwingungstilger ergibt sich zwangsläufig aus der Geometrie der Schraubenfeder. Weiters kann man noch erkennen, dass in dieser Ausführungsform die an der inneren Feder 1a befestigten Schwingungstilger 4c' einzeln, die an der äußeren Feder 1b befestigten Schwingungstilger 4a', 4a" hingegen jeweils paarweise angeordnet sind. Speziell die einzelne Anordnung der inneren Schwingungstilger 4c' ist ebenfalls zwangsweise durch die Geometrie der Schraubenfeder 1 vorgegeben.

Die in Fig. 2 dargestellten Schwingungstilger 4a', 4a" und 4c' zeigen eine erste Ausführungsform eines Schwingungstilgers 4. Erkennbar ist ein Schalenelement 5, welches mit einer Gewindestange 7 fest verbunden ist. Das Schalenelement 5 ist beispielsweise aus Blech hergestellt und mittels Klemmen 8a, 8b, beispielsweise Schlauchklemmen, an einem Federdraht 6 einer Feder 1 befestigt. Die Gewindestange 7 ist mittels einer Schweißverbindung mit dem Schalenelement 5 verbunden. Auf die Gewindestange 7 ist ein als Gummirundlager ausgebildetes Federelement 3 aufgesetzt. An dem Federelement 3 ist - wie der Figur zu entnehmen - ein Massenelement 2 befestigt.

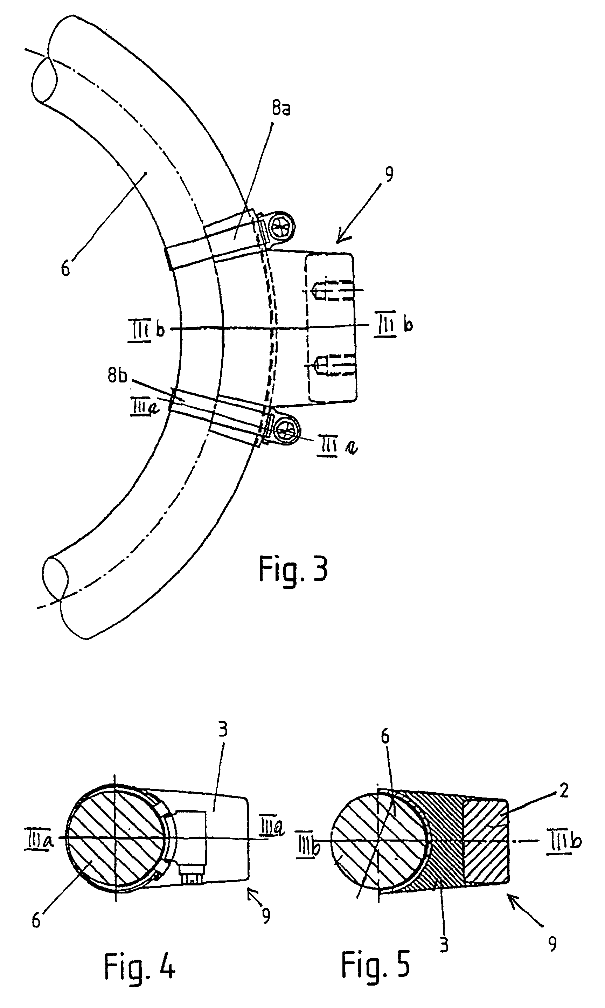

In den Fig. 3 - Fig. 5 ist noch eine zweite Ausführungsform eines Schwingungstilgers 9 dargestellt. Dabei zeigt Fig. 3 einen Teilbereich eines Federdrahtes 6 einer Schraubenfeder, an welcher der Schwingungstilger 9 angebracht ist. Dabei besteht der Schwingungstilger 9 wiederum aus einem Schalenelement 5, etwa einer Blechschale, welche mittels zweier Klemmen 8a, 8b, beispielsweise Schlauchklemmen, an dem Federdraht 6 befestigt ist Aus dem in Fig. 4 dargestellten Schnitt entlang der Linie IIIa-IIIa nach der Fig. 3 ist dabei die halbkreisartige Form des Schalenelementes 5 besser erkennbar.

Aus Fig. 5 kann man erkennen, dass das als Gummifeder ausgebildete Federelement 3 in der dargestellten Ausführungsform des Schwingungstilgers 9 fest mit dem Schalenelement 5 verbunden ist, beispielsweise mittels einer Klebeverbindung. Ebenso ist erkennbar, dass das Massenelement 2 fest mit dem Federelement 3 verbunden ist, wobei bei der dargestellten Ausführungsform eine Aufnahme in der Gummifeder für das Massenelement 2 vorgesehen ist.

Diese Ausführungsform eines Schwingungstilgers 9 zeichnet sich durch eine kompakte Form aus und ermöglicht einen sofortigen serienmäßigen Einsatz, allerdings kann diese Ausführungsform nach der Fertigung nicht mehr für verschiedene Federn mit unterschiedlichen Eigenfrequenzen angepaßt werden.

Im folgenden soll die Funktionsweise von an der Schraubenfeder angebrachten Schwingungstilgern erläutert werden.

Unangenehme Lärmbelästigungen im Inneren des Wagenkastens von Lokomotiven treten aus dem Grund auf, dass beim Überfahren von Schienenschwellen die Schraubenfedern, die zur Schwingungsdämpfung des Wagenkastens dienen, mit der "Schwellenfrequenz", die vom Abstand der Schwellen und von der Bewegungsgeschwindigkeit der Lokomotive abhängt, zu Längsschwingungen in Richtung ihrer Längsachse angeregt werden. Liegt diese Schwellenfrequenz nun im Bereich der Eigenfrequenz der Schraubenfeder, so kommt es zu Resonanzanregungen der Federn, die sich im Wageninneren durch Dröhnerscheinungen bemerkbar machen.

Zur Tilgung dieser Resonanzerscheinungen werden bei der vorliegenden Erfindung Schwingungstilger an den Schraubenfedern angebracht. Um eine signifikante dämpfende Wirkung der Schwingungstilger zu erreichen, ist es notwendig, dass die Eigenfrequenz des Tilgers der zu betilgenden Eigenfrequenz der Schraubenfeder entspricht. Das kann bei der vorliegenden ersten Ausführung eines Schwingungstilgers sehr einfach durch die Wahl der entsprechenden Zusammensetzung des Gummimaterials und durch Anbringen von Massenelementen erreicht werden. Wird die Schraubenfeder, beispielsweise durch das Überfahren von Schienenschwellen, mit einer periodischen Kraft angeregt, wobei die Anregungsfrequenz im Bereich der Eigenfrequenz der Feder liegt, so wird nun ein Teil der Schwingungsenergie auf den oder die an der Feder befestigten Schwingungstilger übertragen. Die Schwingungstilger schwingen mit der Eigenfrequenz der Schraubenfeder gegen die Bewegung der Feder, wodurch sich eine deutlich verringerte Schwingungsamplitude der Schraubenfeder ergibt. Zweckmäßigerweise werden die Schwingungstilger an den mittleren Windungen der Schraubenfedern montiert, da bei den Resonanzschwingungen, zu denen die Schraubenfeder angeregt wird, im allgemeinen die erste Eigenform, deren Schwingungsbauch etwa in der Federmitte liegt, am dominantesten ist. Obwohl die Krafteinleitung des Tilgers außerhalb der Federwirklinie erfolgt und damit ein zusätzliches Moment eingeleitet wird, hat dies keinen Einfluß auf das Übertragungsverhalten oder die Funktion des Schwingungstilgers. Um die Wirkung des Schwingungstilgers zusätzlich noch zu verbessern, ist es günstig, wenn das Federelement des Schwingungstilgers zusätzlich noch dämpfende Eigenschaften aufweist. Für ein Federelement aus Gummi hat sich dabei ein Verlustwinkel von 10° bis 20° als günstig erwiesen.

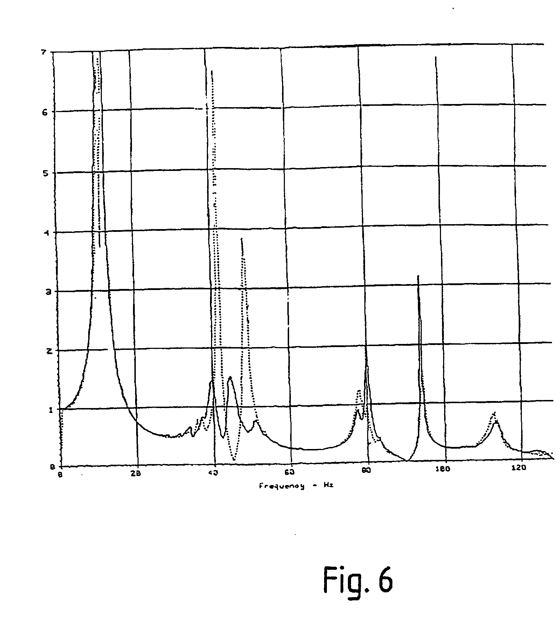

Die Wirkungsweise der Schwingungstilger wurde an den Schraubenfedern einer Lokomotive der Baureihe 1014 erprobt, welche innere und äußere Sekundärfedern aufweist. Die Eigenfrequenzen der inneren Sekundärfedern betrugen dabei ca. 48 Hz, jene der äußeren ca. 40 Hz (Bericht des Österreichischen Forschungs- und Prüfzentrums Arsenal, Auftrag Nr. G02/45101935). Diese Eigenfrequenzen werden bei den üblichen Schwellenabständen von ca. 65 cm bei Geschwindigkeiten von etwa 95 km/h bzw. 113 km/h angeregt. Standversuche, bei denen vorerst die Resonanzkurven der inneren und äußeren Sekundärfedern ohne Schwingungstilger aufgenommen wurden, und anschließend mit auf die Eigenfrequenzen der Federn abgestimmten Schwingungstilgern sind in der Fig. 6 dargestellt. Die punktierte Kurve stellt dabei die Anregungskurve als Funktion der Frequenz der Sekundärfedern ohne Schwingungstilger, die durchgezogene Kurve die Anregungskurve mit an den Federn befestigten, auf die Eigenfrequenzen der Federn abgestimmten Schwingungstilgern dar. Für die inneren Schraubenfedern ergab sich durch das Anbringen der Schwingungstilger eine Absenkung in der Kraftverstärkung von ca. -8 dB, für die äußeren Federn eine Absenkung von ca. -13 dB. Zu beachten ist hier, dass sich durch Anbringen der Schwingungstilger an den Federn die Eigenfrequenzen der Federn um ca. 2 Hz - 2,5 Hz verringerten, wie dies auch aus der Fig. 6 erkennbar ist.

Weiters wurden Fahrversuche mit einer Lokomotive der Baureihe 1014 durchgeführt, wobei einerseits Versuchsstrecken mit konstanter Geschwindigkeit durchfahren wurden, und andererseits Strecken mit langsam veränderlicher Geschwindigkeit im Bereich der Eigenfrequenzen der Sekundärfedern durchfahren wurden. Dabei wurden unter anderem die Dröhnerscheinungen in den Führerkabinen der Lokomotive gemessen, wobei festgestellt wurde, dass diese Dröhnerscheinungen mit Hilfe der Schwingungstilger stark abgeschwächt wurden bzw. nicht mehr feststellbar waren. Bei diesen Fahrversuchen wurde ebenfalls berücksichtigt, dass durch die Schwingungstilger die Eigenfrequenz der Sekundärfedern um ca. 2 Hz- 2,5 Hz vermindert wurde, was Geschwindigkeiten von ca. 90 km/h bzw. 107 km/h zur Anregung der Eigenfrequenzen der Federn entspricht.

Vorteilhaft am Einsatz von Schwingungstilgern ist, dass Veränderungen im Übertragungsverhalten mit sehr geringem Masseneinsatz erzielt werden können. Bei Verwendung einer ersten Ausführungsform eines oben beschriebenen Schwingungstilgers erweist es sich dabei als vorteilhaft, dass auf einfache Weise verschiedene Tilgergrößen gebildet werden können, eine einfache Frequenzabstimmung des Tilgers über weite Frequenzbereiche möglich ist, und weiters die leichte Austauschbarkeit der verschiedenen Teile sowie ein einfaches Montieren an den unterschiedlichsten Positionen der Schraubenfedern gewährleistet ist.

Die zweite, oben beschriebene Ausführungsform eines Schwingungstilgers erweist sich v. a. dann als günstig, wenn an einen serienmäßigen Einbau der erfindungsgemäßen Feder 1, beispielsweise von Schraubenfedern, mit daran befestigten Schwingungstilgern gedacht ist. Die zweite Ausführungsform ist insbesondere durch ihre kompakte und stabile Form für eine serienmäßige Montage bei Schienenfahrzeugen geeignet.

## Patentansprüche

1. Schranbenfedor, an welcher an einem Schraubengang zumindest ein Schwingungstilger (4a - 4f; 4a', 4a", 4c'; 9) befestigt ist, der zumindest ein Massenelement (2) aufweist,
**dadurch gekennzeichnet, dass**
zwischen dem/den Massenelement(en) (2) und dem Schraubengang zumindest ein Federelement (3) angeordnet ist, und das zumindest eine Federelement (2) sowie das/die Massenelement(e) (3) dermaßen aufeinander abgestimmt sind, dass bei einer Anregung der Schraubenfeder (1) mit einer Erregerfrequenz, welche in einem Bereich der zumindest einen Eigenfrequenz der Schraubenfeder (1) liegt bzw. mit dieser übereinstimmt, zumindest ein Teil der Schwingungsenergie der Schraubenfeder (1) auf das zumindest eine Massenelement (3) und/oder das zumindest eine Federelement (2) übergeht.

2. Feder nach Anspruch 1, **dadurch gekennzeichnet, dass** das zumindest eine Federelement (3) schwingungsdämpfende Eigenschaften aufweist.

3. Feder nach Anspruch 1 oder 2, **dadurch gekennzeichnet, dass** das zumindest eine Federelement (3) als Gummifeder ausgebildet ist.

4. Feder nach Anspruch 3, **dadurch gekennzeichnet, dass** ein Gummimaterial der Gummifeder einen Verlustwinkel von 10° - 20 aufweist.

5. Feder nach einem der Ansprüche 1 bis 4, **dadurch gekennzeichnet, dass** ein Schwingungstilger (4a - 4f; 4a', 4a", 4c'; 9) mittels eines Schalenelementes (5) an einem Federdraht (6) der Feder (1) befestigbar ist.

6. Feder nach Anspruch 5, **gekennzeichnet durch** einen Schwingungstilger (9), dessen Federelement (3) einerseits fest mit dem Schalenelement (5) und andererseits fest mit einem oder mehreren Massenelementen (2) verbunden ist.

7. Feder nach Anspruch 5 oder 6, **gekennzeichnet durch** einen Schwingungstilger (4a - 4f; 4a', 4a", 4c'), welcher **durch** ein Schalenelement (5) an einem Federdraht (6) der Feder (1) befestigt ist, wobei
- das Schalenelement (5) fest mit einer Gewindestange (7) verbunden ist,
- das Federelement (3) als Rundlager ausgebildet ist, welches auf der Gewindestange (7) angeordnet ist, und weiters
- außerhalb des Federelementes (3), in einem dem Schalenelement (3) abgewandten Bereich, zumindest ein Massenelement (2) mit dem Federelement (3) verbunden ist.

8. Feder nach einem der Ansprüche 1 bis 7, **dadurch gekennzeichnet, dass** der zumindest eine Schwingungstilger (4a - 4f; 4a', 4a", 4c'; 9) im Bereich eines Schwingungsbauches der Eigenfrequenz der zu betilgenden Eigenschwingung an der Feder (1) befestigbar sind.

9. Feder nach Anspruch 8, **dadurch gekennzeichnet, dass** der zumindest eine Schwingungstilger (4a - 4f; 4a', 4a", 4c'; 9) im wesentlichen auf mittlerer Höhe der Feder (1) befestigbar ist.

10. Feder nach einem der Ansprüche 1 bis 9, **gekennzeichnet durch** eine Verwendung als Primär- und/oder Sekundärfeder bei Schienenfahrzeugen.

## Claims

1. Helical spring, on which at least one vibration damper (4a-4f; 4a', 4a", 4c'; 9) is fixed onto a thread, which damper comprises at least one mass element (2),
**characterised in that**
at least one resilient element (3) is disposed between the mass element(s) (2) and the thread and the at least one resilient element (2) as well as the mass element(s) (3) are tailored to suit each other in such a manner that when the helical spring (1) is excited with an excitation frequency, which is in a range of at least one natural frequency of the helical spring (1) and/or is equal thereto, at least one portion of the vibration energy of the helical spring (1) passes to the at least one mass element (3) and/or the at least one resilient element (2).

2. Spring as claimed in Claim 1, **characterised in that** the at least one resilient element (3) comprises vibration-reducing properties.

3. Spring as claimed in Claim 1 or 2, **characterised in that** the at least one resilient element (3) is formed as a rubber spring.

4. Spring as claimed in Claim 3, **characterised in that** a rubber material of the rubber spring comprises a phase angle from 10 to 20°.

5. Spring as claimed in any one of Claims 1 to 4, **characterised in that** a vibration damper (4a-4f; 4a', 4a", 4c'; 9) can be fixed by means of a dish element (5) onto a spring wire (6) of the spring (1).

6. Spring as claimed in Claim 5, **characterised by** a vibration damper (9) whose resilient element (3) on the one hand is fixedly connected to the dish element (5) and on the other hand is fixedly connected to one or more mass elements (2).

7. Spring as claimed in Claim 5 or 6, **characterised by** an vibration damper (4a-4f; 4a', 4a", 4c') which is fixed onto a spring wire (6) of the spring (1) by means of a dish element (5) wherein
- the dish element (5) is fixedly connected to a threaded rod (7),
- the resilient element (3) is formed as a round bearing, which is disposed on the threaded rod (7), and further
- at least one mass element (2) is connected to the resilient element (3) outside of the resilient element (3) in a region opposite the dish element (3).

8. Spring as claimed in any one of Claims 1 to 7, **characterised in that** the at least one vibration damper (4a-4f; 4a', 4a", 4c'; 9) can be fixed onto the spring (1) in the region of an antinode of the natural frequency of the natural vibration to be dampened.

9. Spring as claimed in Claim 8, **characterised in that** the at least one vibration damper (4a-4f; 4a', 4a", 4c'; 9) can be fixed substantially at the mid-height of the spring (1).

10. Spring as claimed in any one of Claims 1 to 9, **characterised by** a use as a primary and/or secondary spring in rail vehicles.

## Revendications

1. Ressort à boudin, sur lequel au moins un suppresseur de vibrations (4a - 4f; 4a', 4a", 4c'; 9), qui comporte au moins un élément de masse (2), est fixé sur un pas vis,
**caractérisé en ce que**
au moins un élément de ressort (3) est disposé entre l'élément/les éléments de masse (2) et le pas de vis et **en ce que** le au moins un élément de ressort (2) ainsi que l'élément/les éléments de masse (2) sont ajustés les uns par rapport aux autres de manière à ce que, lors d'une excitation du ressort à boudin (1) par une fréquence d'excitation qui se trouve dans une plage de la au moins une fréquence de résonance du ressort à boudin (1) ou qui est en harmonie avec celle-ci, au moins une partie de l'énergie vibrationnelle du ressort à boudin (1) passe dans le au moins un élément de masse (3) et/ou dans le au moins un élément de ressort (2).

2. Ressort selon la revendication 1, **caractérisé en ce que** le au moins un élément de ressort (3) présente des propriétés antivibratiles.

3. Ressort selon la revendication 1 ou 2, **caractérisé en ce que** le au moins un élément de ressort (3) est configuré comme un ressort en caoutchouc.

4. Ressort selon la revendication 3, **caractérisé en ce qu'**une matière caoutchoutée du ressort en caoutchouc présente un angle de pertes de 10°-20.

5. Ressort selon l'une quelconque des revendications 1 à 4, **caractérisé en ce qu'**un suppresseur de vibrations (4a - 4f; 4a', 4a", 4c'; 9) peut être fixé sur un fil d'acier à ressort (6) du ressort (1) à l'aide d'un élément de coque (5).

6. Ressort selon la revendication 5, **caractérisé par** un suppresseur de vibrations (9) dont l'élément de ressort (3) est raccordé, d'une part, fixement à l'élément de coque (5) et, d'autre part, fixement à un ou plusieurs éléments de masse (2).

7. Ressort selon la revendication 5 ou 6, **caractérisé par** un suppresseur de vibrations (4a - 4f; 4a', 4a", 4c'; 9) qui est fixé sur un fil d'acier à ressort (6) du ressort (1) à l'aide d'un élément de coque (5), de sorte que :
- l'élément de coque (5) est raccordé fixement à une tige filetée (7),
- l'élément de ressort (3) est formé comme un palier rond qui est monté sur la tige filetée, et, de plus,
- au moins un élément de masse (2) est raccordé à l'élément de ressort (3) à l'extérieur de l'élément de ressort (3), dans une zone opposée à l'élément de coque (3).

8. Ressort selon l'une quelconque des revendications 1 à 7, **caractérisé en ce que** le au moins un suppresseur de vibrations (4a à 4f; 4a', 4a", 4c'; 9) peut être fixé sur le ressort (1) dans la zone d'un fuseau de vibration de la fréquence de résonance de la vibration propre à supprimer.

9. Ressort selon la revendication 8, **caractérisé en ce que** le au moins un suppresseur de vibrations (4a à 4f; 4a', 4a", 4c'; 9) peut être fixé essentiellement à mi-hauteur du ressort (1).

10. Ressort selon l'une quelconque des revendications 1 à 9, **caractérisé par** une utilisation comme ressort primaire et/ou secondaire dans des véhicules sur rails.
